# EUROPÄISCHE PATENTSCHRIFT

(11) **EP 0 974 264 B1**
(45) Veröffentlichungstag und Bekanntmachung des Hinweises auf die Patenterteilung: **12.12.2001**
(21) Anmeldenummer: 99108880.8
(22) Anmeldetag: 05.05.1999
(51) Int. Cl.: A01K 5/00, A01K 9/00, A01K 1/00, A01K 5/02

(54) **Verfahren zur Fütterung von Tieren**
Method of feeding animals
Méthode de distribution de la nourriture pour les animaux

(30) Priorität: 21.07.1998 DE 19832732
(43) Veröffentlichungstag der Anmeldung: 26.01.2000
(73) Patentinhaber: HoWema Gerätebau GmbH & Co. KG, 49429 Visbek (DE)
(72) Erfinder: Magnus Westerkamp, 49377 Langförden (DE)
(74) Vertreter: Jabbusch, Wolfgang, Dr.Jur.

(56) Entgegenhaltungen:
- WO-A-97/15185
- DE-C- 3 144 477
- US-A- 4 060 054
- US-A- 4 478 175

## Beschreibung

Die Erfindung betrifft ein Verfahren zur Fütterung von Tieren, insbesondere von Schweinen, bei dem die Temperatur in der Umgebung der Tiere gemessen wird und aus der Messung gewonnene Temperaturdaten bei der Futterversorgung berücksichtigt werden.

Ein Verfahren der eingangs genannten Gattung ist nach der DE 31 44 477 C1 bekannt. Bei dem bekannten Verfahren wird die in der Umgebung der Tiere gemessene Temperatur als Faktor bei der Dosierung der auszufütternden Menge des Futters berücksichtigt.

Nach der WO 97/15185 A ist es lediglich bekannt, das zur Vermeidung des Verderbens gekühlt bevorratete Futter unmittelbar vor seiner Verabreichung an die Tiere mittels einer Art "Durchlauferhitzer" auf eine angemessene und damit insbesondere für Jungtiere verträgliche Temperatur zu erwärmen.

Der Erfindung liegt die Aufgabe zugrunde, ein Verfahren der eingangs genannten Gattung weiterzuentwickeln, um eine Fütterungsoptimierung zu erzielen.

Diese Aufgabe wird erfindungsgemäß dadurch gelöst, daß die Futterzusammensetzung unter Verwendung der erhobenen Temperaturdaten bestimmt wird.

Bei hohen Stallinnentemperaturen haben die Tiere weniger Appetit. Sie benötigen aber dennoch eine bestimmte Energiemenge als Erhaltungs- und Wachstumsenergie, was aus der Bedarfs-Futterkurve entnehmbar ist. Auch bei hohen Temperaturen im Stall sollen daher die Tiere animiert werden, ihren Futterbedarf in ausreichendem Maße zu decken, zum Beispiel durch Verabreichung eines für die Tiere besonders schmackhaften Futters, das sich aus entsprechenden Komponenten vormischen läßt.

Unter Berücksichtigung der Temperaturdaten kann nicht nur die Futterzusammensetzung, sondern auch der Verfütterungszeitpunkt und/oder die Anbietungsdauer für das Futter vorbestimmt werden. Zum Beispiel könnte bei einer besonders hohen Temperatur eine geringere Futtermenge angeboten werden, was dem geringeren Appetit der Tiere bei hohen Temperaturen entgegenkommt, jedoch dafür ein Futter angeboten werden, welches energiereicher ist. Bei kälteren Temperaturen könnte eine größere Futtermenge mit vielleicht mehr Ballaststoffen verfüttert werden. Das Futter kann also nicht nur im Hinblick auf die Energiemenge eingestellt werden, sondern auch im Hinblick auf die angebotenen ernährungsphysiologischen Bestandteile, wie zum Beispiel Proteine, Mineralien, Spurenelemente, Geschmacksstoffe usw. Insbesondere könnte natürlich auch der Feuchtegehalt des Futters vorgegeben werden.

Außerdem könnte an warmen Tagen das Futter zu anderen Zeitpunkten angeboten werden, als an kalten Tagen.

Eine mehr oder weniger automatisch ablaufende Fütterung ist mit datentechnischen Elementen aus dem Stand der Technik ohne weiteres möglich. Es ist bereits heute üblich, Prozeßrechner für derartige Fütterungsverfahren zu verwenden, in die Wertetabellen als Dateien eingespeist sind, aus denen entsprechend der aktuell gemessenen Parameter die entsprechenden Futterwerte herausgelesen werden können, auf deren Grundlage dann beispielsweise das Futter durch mehr oder weniger automatische Siloentnahme aus den Komponenten zusammengestellt, gemischt und über Rohrleitungen verfüttert wird.

Die Temperatur kann in der näheren und/oder weiteren Umgebung der Tiere gemessen werden und zwar die Stallinnentemperatur und die -außentemperatur. Zwar ist es durchaus möglich, Ställe durch Lüftungen und entsprechende Steuerungen in gewissem Maße zu kühlen, jedoch ist dies relativ energieaufwendig und nur bis zu einer begrenzten Temperaturdifferenz zwischen Außen- und Innentemperatur möglich. Trotz einer Kühlung wird die Stallinnentemperatur letztlich bei sehr hoher Außentemperatur nach und nach ansteigen.

Die Messung der Außentemperatur kann daher insbesondere für eine Prognose der künftigen Entwicklung der Stallinnentemperatur dienen und somit eine vorbereitete Reaktion auf eine später wahrscheinlich eintretenden Stallinnentemperatur begünstigen.

Insbesondere ist es vorteilhaft, zu erfassende Temperaturdaten gemeinsam zu berücksichtigen, also sowohl die Außentemperatur und die Stallinnentemperatur, als auch die Temperatur des Futters bzw. der Futterkomponenten, um beides optimal aufeinander abzustimmen. Dabei ist es optimal, wenn den Tieren ein Futter angeboten wird, das eine Temperatur aufweist, die im Bereich der natürlichen Körpertemperatur des zu fütternden Tieres liegt. Insbesondere zu kaltes Futter hat unter Umständen negativen Einfluß auf den Appetit der zu fütternden Tiere, und außerdem muß das Futter letztlich von den Tieren im Körper auf die Körpertemperatur erwärmt werden. Es läßt sich leicht die Energiebilanz aufstellen, daß es kostengünstiger ist, das Futter durch zur Verfügung stehende Wärmequellen vor der Verfütterung entsprechend aufzuwärmen und an die Tier warm zu verfüttern, als das Futter kalt zu verfüttern und es durch die Tiere selbst im Körperinneren aufwärmen zu lassen. Für die Erwärmung eines kalten Futters durch das Tier selbst, von beispielsweise 8°C auf 36°C, muß ein Anteil des Futters selbst allein für die Aufwärmung des Futters von dem Tier in Wärmeenergie umgewandelt werden. Für die Erwärmung von einem Kilogramm Futter über die vorgenannte Temperaturdifferenz werden beispielsweise ungefähr 30 kcal benötigt. Wird diese Erwärmung beispielsweise mit Hilfe von Heizöl und Warmwasser durchgeführt, sind die Kosten für diese Energiespender wesentlich weniger als für die zusätzliche Futtermenge, die die Tiere für eine entsprechende Erwärmung des Futters in ihrem eigenen Körperinneren benötigen. Die Aufnahme warmen Futters ist außerdem insgesamt für die Tiere auch gesundheitsförderlich. Dosierung der Futtermittel, Futterzusammensetzung, Verfütterungszeitpunkt und Anbietungsdauer für das Futter lassen sich miteinander verknüpfen und ergeben die gewünschte Fütterungsoptimierung.

Eine weitere Möglichkeit sieht vor, daß im weitesten Sinne physiologische Daten der Tiere selbst, vorzugsweise deren Haut- und/oder Innentemperatur, bestimmt werden.

Eine optimalere Fütterzuordnung ist dadurch möglich, daß nicht nur quasi die physikalischen Rahmendaten gemessen und bei der Fütterung berücksichtigt werden, sondern auch die gegebenenfalls am Tier selbst zu messenden Daten, so daß verifiziert wird, in welcher Weise und in welchem Maße das einzelne Tier auf die gemessenen Rahmendaten reagiert. Nicht jedes Tier reagiert beispielsweise auf Hitze gleich, so daß unter Umständen noch sehr viel differenzierter individuell für das einzelne Tier die Fütterung aufgrund der gewonnenen Daten angepaßt werden kann. Auch dies ist nach dem Stand der Technik prinzipiell möglich, indem beispielsweise das einzelne Tier aufgrund einer Plakette mit Hilfe eines Lesegerätes individuell erkannt wird und beispielsweise über eine individuelle Anbietungszeitdauer das entsprechende Futter angeboten bekommt, was durch Zugangs- und/oder Fütterungssperren an der Futterstelle eingestellt werden kann.

Als physiologisch zu erhebende Daten kommen beispielsweise in Betracht: Hauttemperatur, Hautfeuchtigkeit, Zusammensetzung der Exkremente und ähnliche, für die Anamnese geeignete Daten, die zum Teil sehr schnell mit entsprechenden Sensoren erfaßt werden können, sei es durch kurzzeitige Kontaktierung, durch Reflexsionsmessungen oder durch Probenentnahmen.

## Patentansprüche

1. Verfahren zur Fütterung von Tieren, insbesondere von Schweinen, bei dem die Temperatur in der Umgebung der Tiere gemessen wird und die aus der Messung gewonnenen Temperaturdaten bei der Futterversorgung berücksichtigt werden,
**dadurch gekennzeichnet,**
**daß** die Futterzusammensetzung unter Verwendung der erhobenen Temperaturdaten bestimmt wird.

2. Verfahren nach Anspruch 1, **dadurch gekennzeichnet, daß** der Verfütterungszeitpunkt unter Verwendung der erhobenen Temperaturdaten bestimmt wird.

3. Verfahren nach einem der Ansprüche 1 und 2, **dadurch gekennzeichnet, daß** die Futtermenge unter Verwendung der erhobenen Daten bestimmt wird.

4. Verfahren nach einem oder mehreren der vorhergehenden Ansprüche, **dadurch gekennzeichnet, daß** die Futteranbietungs-Zeitdauer unter Verwendung der erhobenen Temperaturdaten bestimmt wird.

5. Verfahren nach Anspruch 1, **dadurch gekennzeichnet, daß** die Stallinnentemperatur gemessen wird.

6. Verfahren nach Anspruch 1 oder 5, **dadurch gekennzeichnet, daß** die Stallaußentemperatur gemessen wird.

7. Verfahren nach einem der vorhergehenden Ansprüche, **dadurch gekennzeichnet, daß** die Temperatur des Futters, der Komponenten des Futters und/oder der Futtervormischung gemessen wird und daß die daraus gewonnenen Temperaturdaten gemeinsam mit den aus der Umgebung der Tiere gewonnenen Temperaturdaten bei der Futterversorgung berücksichtigt werden.

8. Verfahren nach Anspruch 7, **dadurch gekennzeichnet, daß** das Futter, die Komponenten des Futters und/oder Futtervormischungen temperiert wird bzw. werden.

9. Verfahren nach Anspruch 8, **dadurch gekennzeichnet, daß** zur Temperierung Wasser einer bestimmten Temperatur verwendet wird.

10. Verfahren nach einem der Ansprüche 1 bis 9, **dadurch gekennzeichnet, daß** im weitesten Sinne physiologische Daten der Tiere selbst, insbesondere deren Haut- und/oder Innentemperatur bestimmt werden.

## Claims

1. A method of feeding animals, in particular pigs, where the temperature in the environment of the animals is measured and the temperature information obtained from the measurement is taken into account in the feed supply,
**characterized in that**
the feed composition is determined by using the temperature information thus obtained.

2. The method according to Claim 1, **characterized in that** the feeding time is determined by using the temperature information thus obtained.

3. The method according to one of Claims 1 and 2, **characterized in that** the amount of feed is determined by using the information thus obtained.

4. The method according to one or more of the preceding claims, **characterized in that** the feed offering time is determined on the basis of the temperature information thus obtained.

5. The method according to Claim 1, **characterized in that** the interior temperature in the shed is measured.

6. The method according to Claim 1 or 5, **characterized in that** the outside temperature of the shed is measured.

7. The method according to one of the preceding claims, **characterized in that** the temperature of the feed, the components of the feed and/or the feed premix is measured, and the temperature information obtained from it is taken into account together with the temperature information obtained from the environment of the animals in supplying feed to the animals.

8. The method according to Claim 7, **characterized in that** the feed, the components of the feed and/or feed premixes are thermally regulated.

9. The method according to Claim 8, **characterized in that** water at a certain temperature is used for thermal regulation.

10. The method according to one of Claims 1 through 9, **characterized in that** physiological information on the animals themselves in the broadest sense, in particular their skin temperature and/or internal temperature is determined.

## Revendications

1. Procédé pour nourrir des animaux, en particulier des porcs, dans lequel la température dans le milieu ambiant aux animaux est mesurée et les données de température, résultant de la mesure, sont prises en compte pour l'alimentation, **caractérisé en ce que** la composition des aliments est déterminée par utilisation des données de température relevées.

2. Procédé selon la revendication 1, **caractérisé en ce que** l'heure de distribution de la nourriture est déterminée par utilisation des données de température relevées.

3. Procédé selon l'une des revendications 1 et 2, **caractérisé en ce que** la quantité de nourriture est déterminée par utilisation des données relevées.

4. Procédé selon une ou plusieurs des revendications précédentes, **caractérisé en ce que** la durée de distribution de la nourriture est déterminée par utilisation des données de température relevées.

5. Procédé selon la revendication 1, **caractérisé en ce que** la température intérieure à l'étable ou porcherie est mesurée.

6. Procédé selon la revendication 1 ou 5, **caractérisé en ce que** la température extérieure à l'étable ou porcherie est mesurée.

7. Procédé selon l'une des revendications précédentes, **caractérisé en ce que** la température de la nourriture, des composants de la nourriture et/ou du prémélange de la nourriture est mesurée et **en ce que** les données de température ainsi obtenues sont prises en compte, avec les données de température obtenues à partir du milieu ambiant aux animaux, pour la distribution de la nourriture.

8. Procédé selon la revendication 7, **caractérisé en ce que** la nourriture, les composants de la nourriture et/ou les pré-mélanges de nourriture sont tempérés.

9. Procédé selon la revendication 8, **caractérisé en ce que** l'on utilise de l'eau à une température déterminée pour tempérer.

10. Procédé selon l'une des revendications 1 à 9, **caractérisé en ce que** des données physiologiques au sens très large des animaux eux-mêmes, en particulier la température de leur peau et/ou la température interne, sont déterminées.
